# EUROPÄISCHE PATENTANMELDUNG

(11) **EP 4 235 006 A1**
(43) Veröffentlichungstag der Anmeldung: **30.08.2023**
(21) Anmeldenummer: 23154141.8
(22) Anmeldetag: 31.01.2023
(51) Int. Cl.: F16L 25/00, E03C 1/04, F16L 33/32

(54) **KLAPPMUFFE MIT HALBSCHALENTEILEN**

(30) Priorität: 25.02.2022 DE 102022104574
(71) Anmelder: Grohe AG, 58675 Hemer (DE)
(72) Erfinder: WOESTHOFF, Wulf, 58675 Hemer (DE); SCHLUETER, Matthias, 44289 Dortmund (DE); KUTSCH, Christian, 44135 Dortmund (DE)

(57) **Zusammenfassung**

Die vorliegende Erfindung betrifft eine Klappmuffe, umfassend ein erstes Halbschalenteil (1) und ein zweites Halbschalenteil (2), wobei das erste und das zweite Halbschalenteil (1, 2) über ein Gelenk (3) drehbar miteinander verbunden sind, wobei das erste Halbschalenteil (1) an der dem Gelenk (3) gegenüberliegenden Seite eine erste Verbindungseinrichtung (4) zur Herstellung einer Verbindung mit dem zweiten Halbschalenteil (2) aufweist, wobei das zweite Halbschalenteil (2) an der dem Gelenk (3) gegenüberliegenden Seite eine zweite Verbindungseinrichtung (5) zur Herstellung einer Verbindung mit dem ersten Halbschalenteil (1) aufweist, wobei das erste und das zweite Halbschalenteil (1, 2) jeweils innenseitig eine dritte Verbindungseinrichtung (6) zur Herstellung einer Verbindung mit einem Schutzrohr (7) und eine vierte Verbindungseinrichtung (8) zur Herstellung einer Verbindung mit einer Sanitäranlage (9) aufweisen.

## Beschreibung

Die vorliegende Erfindung betrifft eine Klappmuffe, umfassend ein erstes Halbschalenteil und ein zweites Halbschalenteil.

Muffen sind Bauelemente, die im Bereich von Sanitäranlagen dazu eingesetzt werden, Rohre, insbesondere Schutzrohre, auch Wellrohre genannt, unterbrechungsfrei miteinander zu verbinden. Muffen sind im Vergleich zu anderen Verbindungstechniken in diesem Bereich relativ einfach handzuhaben, zu montieren und sind vielfach eingesetzt. In den Schutzrohren sind empfindliche und für den bestimmungsgemäßen und sicheren Betrieb von Sanitäranlagen essentielle Leitungen angeordnet bzw. verlegt, insbesondere wasserführende Schläuche und/oder elektrische Kabel. Die Schutzrohre dienen im Allgemeinen dazu, die empfindlichen Leitungen insbesondere vor mechanischer Beschädigung zu schützen. Einerseits dienen Schutzrohre konkret als Knickschutz der innenliegenden Schläuche und Kabel. Mit anderen Worten sollen die Schutzrohre das Knicken bzw. Abknicken der innenliegenden Schläuche oder Kabel verhindern. Andererseits dienen Schutzrohre konkret als Schutz der innenliegenden Schläuche und Kabel vor sonstiger äußerer Beschädigung, zum Beispiel äußerer Krafteinwirkung. Auf diese Weise helfen Schutzrohre, den bestimmungsgemäßen und sicheren Betrieb der wasserführenden Schläuche und elektrischen Kabel von Sanitäranlagen zu gewährleisten.

Bekannte Muffen der gattungsbildenden Art sind lediglich dazu ausgelegt, zwei Schutzrohre miteinander zu verbinden. Mit solchen Muffen ist es jedoch aufgrund der andersartigen Anschlussgeometrie von Sanitäranlagen nicht möglich, ein Schutzrohr und eine Sanitäranlage miteinander zu verbinden. Um ein Schutzrohr mit einer Sanitäranlage zu verbinden und so die innenliegenden Schläuche und Kabel auch in ihrer weiteren Verlegung vor mechanischer Beschädigung zu schützen, können daher die bekannten Muffen der gattungsbildenden Art nicht verwendet werden. Infolgedessen muss zu diesem Zweck auf alternative Verbindungstechniken zurückgegriffen werden. Dies ist mit zusätzlichem Aufwand und somit Mehrkosten verbunden.

Im Lichte der voranstehend erläuterten Problematik liegt der vorliegenden Erfindung die Aufgabe zugrunde, eine Muffe bereitzustellen, die es ermöglicht, ein Schutzrohr mit einer Sanitäranlage zu verbinden.

Die der vorliegenden Erfindung zugrundeliegende Aufgabe wird gelöst durch eine Klappmuffe mit den Merkmalen des unabhängigen Patentanspruchs. Vorteilhafte Weiterbildungen ergeben sich jeweils aus den Unteransprüchen.

Es wird eine Klappmuffe vorgeschlagen, umfassend ein erstes Halbschalenteil und ein zweites Halbschalenteil, wobei das erste und das zweite Halbschalenteil über ein Gelenk drehbar miteinander verbunden sind, wobei das erste Halbschalenteil an der dem Gelenk gegenüberliegenden Seite eine erste Verbindungseinrichtung zur Herstellung einer, insbesondere formschlüssigen oder kraftschlüssigen, vorzugsweise lösbaren, Verbindung mit dem zweiten Halbschalenteil aufweist, wobei das zweite Halbschalenteil an der dem Gelenk gegenüberliegenden Seite eine zweite Verbindungseinrichtung zur Herstellung einer, insbesondere formschlüssigen oder kraftschlüssigen, vorzugsweise lösbaren, Verbindung mit dem ersten Halbschalenteil aufweist. In erfindungsgemäßer Weise weisen das erste und das zweite Halbschalenteil jeweils innenseitig eine dritte Verbindungseinrichtung zur Herstellung einer, insbesondere formschlüssigen oder kraftschlüssigen, vorzugsweise lösbaren, Verbindung mit einem Schutzrohr und eine vierte Verbindungseinrichtung zur Herstellung einer, insbesondere formschlüssigen oder kraftschlüssigen, vorzugsweise lösbaren, Verbindung mit einer Sanitäranlage auf.

Im Allgemeinen gilt, dass eine Klappmuffe eine mittels zumindest eines Drehgelenks klappbare, insbesondere zusammenklappbare und aufklappbare, Muffe ist. Das erste und das zweite Halbschalenteil, die zusammen die erfindungsgemäße Klappmuffe bilden, sind aufeinander zu drehbar und voneinander weg drehbar und sind somit zusammenklappbar und aufklappbar. Die Handhabung und Montage der erfindungsgemäßen Klappmuffe sind daher besonders intuitiv und einfach. Durch die Herstellung einer lösbaren Verbindung zwischen der ersten und zweiten Verbindungseinrichtung und damit zwischen der Klappmuffe und dem Schutzrohr über die dritte Verbindungseinrichtung sowie zwischen der Klappmuffe und der Sanitäranlage über die vierte Verbindungseinrichtung ist auch eine Demontage der Klappmuffe möglich. Dies bewirkt eine weiter intuitive und einfache Handhabung der erfindungsgemäßen Klappmuffe.

Die Klappmuffe kann derart dimensioniert sein, dass sie im zusammengeklappten bzw. montierten Zustand durch das Hahnloch auf einer Spüle gesteckt werden kann. Dadurch ist es möglich, die Klappmuffe und das Schutzrohr vorzumontieren und in diesem Zustand besonders einfach weiter handzuhaben.

Die Klappmuffe kann aus Kunststoff gefertigt sein. Die Fertigung aus Kunststoff ermöglicht aufgrund der Gewichtsreduzierung gegenüber einer Fertigung aus metallischem Werkstoff Vorteile unter anderem in der Handhabung und ist vergleichsweise preiswert.

Die Klappmuffe kann einteilig gefertigt sein. Bei einer einteilig gefertigten Klappmuffe sind das erste und das zweite Halbschalenteil über das Gelenk untrennbar und gleichzeitig drehbar miteinander verbunden. Das heißt, das erste und das zweite Halbschalenteil sind bis in den vollständig geschlossenen bzw. zusammengeklappten Zustand der Klappmuffe aufeinander zu drehbar und sind bis in den vollständig geöffneten bzw. aufgeklappten Zustand der Klappmuffe voneinander weg drehbar. Dadurch kann die Montage der Klappmuffe auf besonders einfache Weise mit nur einer einzigen Hand durchgeführt werden.

Das erste und das zweite Halbschalenteil können jeweils in Form einer Hälfte eines in Längsrichtung durchtrennten Rohrs ausgebildet sein. Das erste und das zweite Halbschalenteil bilden somit gemeinsam einen rohrförmigen Körper, der der jeweiligen äußeren Form des Schutzrohrs und der Anschlussgeometrie der Sanitäranlage im Wesentlichen nachempfunden ist. Durch diese im Wesentlichen rohrförmige Form der Klappmuffe im zusammengeklappten Zustand ist deren Handhabung vereinfacht.

Die erste Verbindungseinrichtung kann zumindest eine Ausnehmung zur Herstellung einer Arretierung, das heißt einer räumlichen Festlegung des ersten und des zweiten Halbschalenteils zueinander, aufweisen. Durch eine solche Arretierung ist eine passgenaue Montage ermöglicht, erübrigt sich der Einsatz von zusätzlichen Werkzeugen und vereinfacht sich somit die Montage der Klappmuffe.

Die erste Verbindungseinrichtung kann zudem zumindest eine Ausnehmung zur Herstellung einer, insbesondere formschlüssigen oder kraftschlüssigen, vorzugsweise lösbaren, Verbindung mit dem zweiten Halbschalenteil aufweisen. Durch eine solche Verbindung erübrigt sich der Einsatz von zusätzlichen Werkzeugen weiter und vereinfacht sich somit die Montage der Klappmuffe weiter.

Die zweite Verbindungseinrichtung kann zumindest eine Anformung zur Herstellung einer Arretierung, das heißt einer räumlichen Festlegung des ersten und des zweiten Halbschalenteils zueinander, aufweisen. Die zweite Verbindungseinrichtung wirkt mit der ersten Verbindungseinrichtung zur Herstellung einer solchen Arretierung des ersten Halbschalenteils zu dem zweiten Halbschalenteil zusammen, und zwar indem die zumindest eine Anformung der zweiten Verbindungseinrichtung mit der entsprechenden, zumindest einen Ausnehmung der ersten Verbindungseinrichtung komplementär zusammen wirkt. Durch eine solche Arretierung ist eine passgenaue Montage ermöglicht, erübrigt sich der Einsatz von zusätzlichen Werkzeugen und vereinfacht sich somit die Montage der Klappmuffe.

Die zweite Verbindungseinrichtung kann zudem zumindest eine Anformung zur Herstellung einer, insbesondere formschlüssigen oder kraftschlüssigen, vorzugsweise lösbaren, Verbindung mit dem ersten Halbschalenteil aufweisen. Die zweite Verbindungseinrichtung wirkt mit der ersten Verbindungseinrichtung zur Herstellung einer solchen Verbindung zwischen dem ersten und dem zweiten Halbschalenteil zusammen, und zwar indem die zumindest eine Anformung der zweiten Verbindungseinrichtung mit der entsprechenden, zumindest einen Ausnehmung der ersten Verbindungseinrichtung komplementär zusammen wirkt. Durch eine solche Verbindung erübrigt sich der Einsatz von zusätzlichen Werkzeugen weiter und vereinfacht sich somit die Montage der Klappmuffe weiter.

Das Gelenk kann zumindest eine parallel zur Längsachse der Klappmuffe verlaufende Drehachse aufweisen. Dies ermöglicht ein besonders einfaches Auf- und Zusammenklappen des ersten und zweiten Halbschalenteils.

Das Gelenk kann zumindest ein Foliengelenk bzw. Faltgelenk bzw. Film Hinge umfassen. Je mehr Foliengelenke das Gelenk umfasst, desto geringer ist die Auslenkung der einzelnen Foliengelenke beim Auf- und Zusammenklappen der Klappmuffe und desto weniger materialbelastend ist das Auf- und Zusammenklappen der Klappmuffe. Dies reduziert die Fertigungskosten der Klappmuffe und vereinfacht deren Handhabung.

Die dritte Verbindungseinrichtung kann zumindest eine radial nach innen gerichtete Anformung zur Herstellung einer, insbesondere formschlüssigen oder kraftschlüssigen, vorzugsweise lösbaren, Verbindung aufweisen. Die dritte Verbindungseinrichtung wirkt mit dem Schutzrohr zur Herstellung einer solchen Verbindung mit diesem zusammen, und zwar indem die zumindest eine radial nach innen gerichtete Anformung der dritten Verbindungseinrichtung mit einer entsprechenden, zumindest einen Ausnehmung des Schutzrohrs komplementär zusammen wirkt. Die Anformung kann stegartig, insbesondere mit einer dreieckförmigen, rechteckförmigen oder trapezförmigen Querschnittfläche, ausgebildet sein. Durch eine solche Verbindung erübrigt sich der Einsatz von zusätzlichen Werkzeugen weiter und vereinfacht sich somit die Montage der Klappmuffe weiter.

Die zumindest eine Anformung der dritten Verbindungseinrichtung kann über den gesamten innenseitigen Umfang oder nahezu über den gesamten innenseitigen Umfang der Klappmuffe verlaufen. Dies ermöglicht eine stabile und belastbare Verbindung zwischen der dritten Verbindungseinrichtung und dem Schutzrohr.

Die vierte Verbindungseinrichtung kann zumindest eine radial nach innen gerichtete Anformung zur Herstellung einer, insbesondere formschlüssigen oder kraftschlüssigen, vorzugsweise lösbaren, Verbindung aufweisen. Die vierte Verbindungseinrichtung wirkt mit der Sanitäranlage zur Herstellung einer solchen Verbindung mit dieser zusammen, und zwar indem die zumindest eine radial nach innen gerichtete Anformung der vierten Verbindungseinrichtung mit einer entsprechenden, zumindest einen Ausnehmung der Sanitäranlage komplementär zusammen wirkt. Die Anformung kann stegartig, insbesondere mit einer dreieckförmigen, rechteckförmigen oder trapezförmigen Querschnittfläche, ausgebildet sein. Durch eine solche Verbindung erübrigt sich der Einsatz von zusätzlichen Werkzeugen weiter und vereinfacht sich somit die Montage der Klappmuffe weiter.

Die zumindest eine Anformung der vierten Verbindungseinrichtung kann über den gesamten innenseitigen Umfang oder nahezu über den gesamten innenseitigen Umfang der Klappmuffe verlaufen. Dies ermöglicht eine stabile und belastbare Verbindung zwischen der vierten Verbindungseinrichtung und der Sanitäranlage.

Die vorliegende Erfindung wird nachfolgend anhand der Figuren näher erläutert. Darin ist eine vorteilhafte Ausführungsform der Erfindung gezeigt, wobei die Erfindung nicht auf diese vorteilhafte Ausführungsform beschränkt ist. Gleiche Bauteile sind in den Figuren stets mit den gleichen Bezugszeichen versehen und sind daher grundsätzlich nur einmal benannt bzw. erwähnt. Es zeigen im Einzelnen
- Figur 1: eine Ausführungsform der erfindungsgemäßen Klappmuffe im aufgeklappten Zustand in einer schematischen Darstellung,
- Figur 2: die Ausführungsform aus Figur 1 im Zusammenbau in einer schematischen Detaildarstellung,
- Figur 3: die Ausführungsform aus den Figuren 1 und 2 im Zusammenbau in einer schematischen Übersichtsdarstellung,
- Figur 4: die Hülse aus Figur 2 in einer schematischen Detaildarstellung.

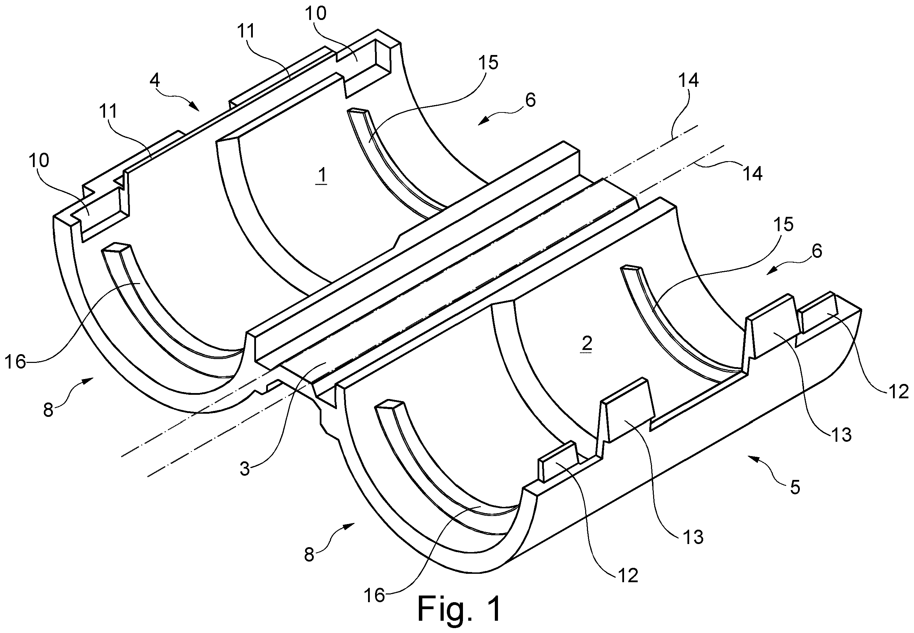

Figur 1 zeigt eine Ausführungsform der erfindungsgemäßen Klappmuffe im aufgeklappten Zustand in einer schematischen Darstellung. Die Klappmuffe umfasst ein erstes Halbschalenteil 1 und ein zweites Halbschalenteil 2, wobei das erste und das zweite Halbschalenteil 1, 2 über ein Gelenk 3 drehbar miteinander verbunden sind. Auf diese Weise ist die Klappmuffe über das Gelenk 3 auf- und zusammenklappbar. Das erste Halbschalenteil 1 weist an der dem Gelenk 3 gegenüberliegenden Seite eine erste Verbindungseinrichtung 4 zur Herstellung einer Verbindung mit dem zweiten Halbschalenteil 2 auf. Das zweite Halbschalenteil 2 weist wiederum an der dem Gelenk 3 gegenüberliegenden Seite eine zweite Verbindungseinrichtung 5 zur Herstellung einer Verbindung mit dem ersten Halbschalenteil 1 auf.

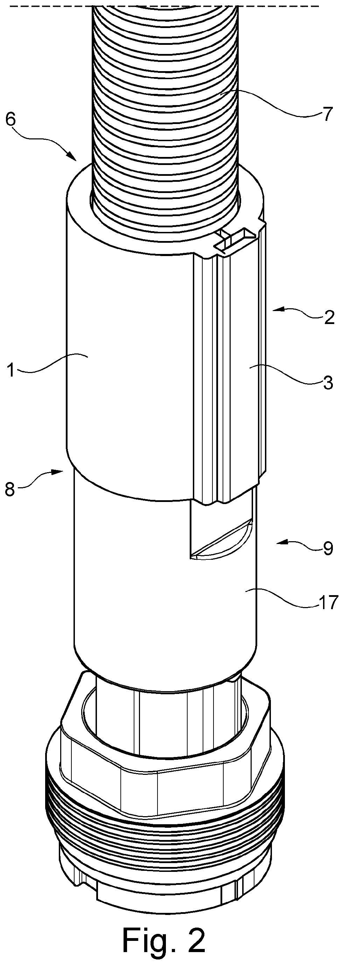

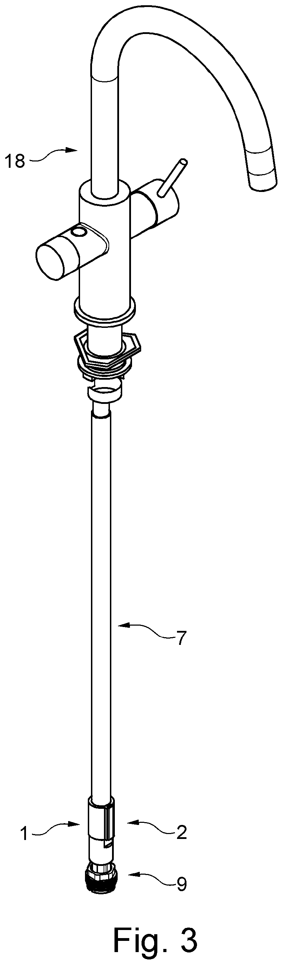

Das erste und das zweite Halbschalenteil 1, 2 weisen jeweils innenseitig eine dritte Verbindungseinrichtung 6 zur Herstellung einer Verbindung mit einem Schutzrohr 7 (gezeigt in Figuren 2, 3) und eine vierte Verbindungseinrichtung 8 zur Herstellung einer Verbindung mit einer Sanitäranlage 9 (gezeigt in Figuren 2, 3, 4) auf.

Die erste Verbindungseinrichtung 4 weist zwei Ausnehmungen 10 zur Herstellung einer Arretierung des ersten Halbschalenteils 1 zu dem zweiten Halbschalenteil 2 beziehungsweise umgekehrt auf. Zudem weist die erste Verbindungseinrichtung 4 zwei Ausnehmungen 11 zur Herstellung einer formschlüssigen und lösbaren Verbindung zwischen dem ersten Halbschalenteil 1 und dem zweiten Halbschalenteil 2 auf.

Die zweite Verbindungseinrichtung 5 weist zwei Anformungen 12 zur Herstellung einer Arretierung des ersten Halbschalenteils 1 zu dem zweiten Halbschalenteil 2 beziehungsweise umgekehrt auf. Zudem weist die zweite Verbindungseinrichtung 5 zwei Anformungen 13 zur Herstellung einer formschlüssigen und lösbaren Verbindung zwischen dem ersten Halbschalenteil 1 und dem zweiten Halbschalenteil 2 auf.

Das Gelenk 3 weist zwei parallel zur Längsachse der Klappmuffe verlaufende Drehachsen 14 auf. Das Gelenk 3 umfasst zwei Foliengelenke.

Die dritte Verbindungseinrichtung 6 weist eine radial nach innen gerichtete und über nahezu den gesamten innenseitigen Umfang der Klappmuffe, das heißt über nahezu den jeweils gesamten innenseitigen Umfang des ersten und zweiten Halbschalenteils 1, 2, verlaufende Anformung 15 zur Herstellung einer formschlüssigen und lösbaren Verbindung zwischen dem Schutzrohr 7 (gezeigt in Figuren 2, 3) und der Klappmuffe auf. Die Anformung 15 ist stegartig mit einer rechteckförmigen Querschnittfläche ausgebildet. Die Anformung 15 greift formschlüssig in eine zu der Anformung 15 formkomplementäre Ausnehmung des Schutzrohrs 7 ein.

Die vierte Verbindungseinrichtung 8 weist eine radial nach innen gerichtete und über nahezu den gesamten innenseitigen Umfang der Klappmuffe, das heißt über nahezu den jeweils gesamten innenseitigen Umfang des ersten und zweiten Halbschalenteils 1, 2, verlaufende Anformung 16 zur Herstellung einer formschlüssigen und lösbaren Verbindung zwischen der Sanitäranlage 9 (gezeigt in Figuren 2, 3, 4) und der Klappmuffe auf. Die Anformung 16 ist stegartig mit einer rechteckförmigen Querschnittfläche ausgebildet. Die Anformung 16 ist größer dimensioniert als die Anformung 15. Die Anformung 16 greift formschlüssig in eine zu der Anformung 16 formkomplementäre Ausnehmung der Sanitäranlage 9 ein.

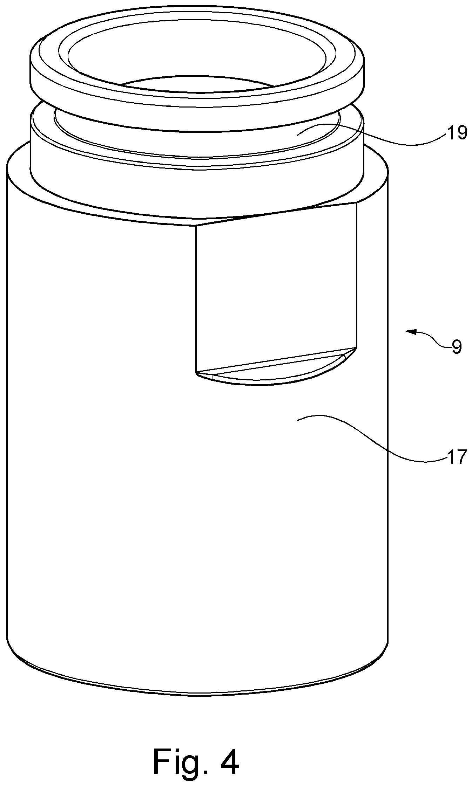

Figur 2 zeigt die Ausführungsform aus Figur 1 im Zusammenbau in einer schematischen Detaildarstellung. Die Klappmuffe ist zusammengeklappt, das heißt die erste Verbindungseinrichtung 4 mit ihren zwei Arretierungsausnehmungen 10 und zwei Verbindungsausnehmungen 11 sind im formschlüssigen und lösbaren Eingriff mit der zweiten Verbindungseinrichtung 5 mit ihren zwei Arretierungsanformungen 12 und zwei Verbindungsanformungen 13. So ist eine formschlüssige und lösbare Verbindung zwischen dem ersten Halbschalenteil 1 und dem zweiten Halbschalenteil 2 hergestellt. Gleichzeitig ist durch das Zusammenklappen der Klappmuffe auch einerseits eine formschlüssige und lösbare Verbindung zwischen der Klappmuffe und dem Schutzrohr 7 hergestellt, da die Anformung 15 im formschlüssigen und lösbaren Eingriff mit formkomplementären Ausnehmungen des Schutzrohrs 7 sind, und andererseits eine formschlüssige und lösbare Verbindung zwischen der Klappmuffe und der Sanitäranlage 9 hergestellt, da die Anformung 16 im formschlüssigen und lösbaren Eingriff mit einer formkomplementären Ausnehmung 19 (gezeigt in Figur 4) der Sanitäranlage 9 sind. Die Sanitäranlage 9 umfasst eine Hülse 17.

Figur 3 zeigt die Ausführungsform aus den Figuren 1 und 2 im Zusammenbau in einer schematischen Übersichtsdarstellung. Eine Sanitärarmatur 18 ist mit dem Schutzrohr 7 verbunden, in dem wasserführende Schläuche verlegt sind. Das Schutzrohr 7 ist wie in Figur 2 im Detail dargestellt mittels der erfindungsgemäßen Klappmuffe mit der Sanitäranlage 9 formschlüssig und lösbar verbunden, um die wasserführenden Schläuche von der Sanitärarmatur 18 weiter in die Sanitäranlage 9 zu führen.

Figur 4 zeigt die Hülse 17 der Sanitäranlage 9 aus Figur 2 in einer schematischen Detaildarstellung. Die Hülse 17 weist eine über ihren gesamten außenseitigen Umfang verlaufende Ausnehmung 19 in Gestalt einer rechteckigen Nut auf. Die Ausnehmung 19 ist formkomplementär zu der Anformung 16 ausgebildet. Die Hülse 17 bildet die Anschlussgeometrie der Sanitäranlage 9 für die Klappmuffe.

### Bezugszeichenliste

- 1: erstes Halbschalenteil
- 2: zweites Halbschalenteil
- 3: Gelenk
- 4: erste Verbindungseinrichtung
- 5: zweite Verbindungseinrichtung
- 6: dritte Verbindungseinrichtung
- 7: Schutzrohr
- 8: vierte Verbindungseinrichtung
- 9: Sanitäranlage
- 10: Ausnehmung
- 11: Ausnehmung
- 12: Anformung
- 13: Anformung
- 14: Drehachse
- 15: Anformung
- 16: Anformung
- 17: Hülse
- 18: Sanitärarmatur
- 19: Ausnehmung

## Patentansprüche

1. Klappmuffe, umfassend ein erstes Halbschalenteil (1) und ein zweites Halbschalenteil (2), wobei das erste und das zweite Halbschalenteil (1, 2) über ein Gelenk (3) drehbar miteinander verbunden sind, wobei das erste Halbschalenteil (1) an der dem Gelenk (3) gegenüberliegenden Seite eine erste Verbindungseinrichtung (4) zur Herstellung einer Verbindung mit dem zweiten Halbschalenteil (2) aufweist, wobei das zweite Halbschalenteil (2) an der dem Gelenk (3) gegenüberliegenden Seite eine zweite Verbindungseinrichtung (5) zur Herstellung einer Verbindung mit dem ersten Halbschalenteil (1) aufweist, **dadurch gekennzeichnet, dass** das erste und das zweite Halbschalenteil (1, 2) jeweils innenseitig eine dritte Verbindungseinrichtung (6) zur Herstellung einer Verbindung mit einem Schutzrohr (7) und eine vierte Verbindungseinrichtung (8) zur Herstellung einer Verbindung mit einer Sanitäranlage (9) aufweisen.

2. Klappmuffe nach einem der vorgenannten Ansprüche **dadurch gekennzeichnet, dass** die erste Verbindungseinrichtung (4) zumindest eine Ausnehmung (10) zur Herstellung einer Arretierung aufweist.

3. Klappmuffe nach einem der vorgenannten Ansprüche **dadurch gekennzeichnet, dass** die erste Verbindungseinrichtung (4) zumindest eine Ausnehmung (11) zur Herstellung einer Verbindung aufweist.

4. Klappmuffe nach einem der vorgenannten Ansprüche **dadurch gekennzeichnet, dass** die zweite Verbindungseinrichtung (5) zumindest eine Anformung (12) zur Herstellung einer Arretierung aufweist.

5. Klappmuffe nach einem der vorgenannten Ansprüche **dadurch gekennzeichnet, dass** die zweite Verbindungseinrichtung (5) zumindest eine Anformung (13) zur Herstellung einer Verbindung aufweist.

6. Klappmuffe nach einem der vorgenannten Ansprüche **dadurch gekennzeichnet, dass** das Gelenk (3) zumindest eine parallel zur Längsachse der Klappmuffe verlaufende Drehachse (14) aufweist.

7. Klappmuffe nach einem der vorgenannten Ansprüche **dadurch gekennzeichnet, dass** die dritte Verbindungseinrichtung (6) zumindest eine radial nach innen gerichtete Anformung (15) zur Herstellung einer Verbindung aufweist.

8. Klappmuffe nach Anspruch 7 **dadurch gekennzeichnet, dass** die zumindest eine Anformung (15) der dritten Verbindungseinrichtung (6) über den gesamten innenseitigen Umfang der Klappmuffe verläuft.

9. Klappmuffe nach einem der vorgenannten Ansprüche **dadurch gekennzeichnet, dass** die vierte Verbindungseinrichtung (8) zumindest eine radial nach innen gerichtete Anformung (16) zur Herstellung einer Verbindung aufweist.

10. Klappmuffe nach Anspruch 9 **dadurch gekennzeichnet, dass** die zumindest eine Anformung (16) der vierten Verbindungseinrichtung (8) über den gesamten innenseitigen Umfang der Klappmuffe verläuft.
